# FASCICULE DE BREVET EUROPEEN

(11) **EP 0 538 710 B1**
(45) Date de publication et mention de la délivrance du brevet: **21.06.1995**
(21) Numéro de dépôt: 92117445.4
(22) Date de dépôt: 13.10.1992
(51) Int. Cl.: G01P 1/00, G01P 15/02

(54) **Capteur de mesure d'une grandeur physique, par exemple d'une acceleration**
Sensor für eine physikalische Grösse, beispielsweise für eine Beschleunigung
Sensor for a physical parameter, for example an acceleration

(30) Priorité: 21.10.1991 FR 9113067
(43) Date de publication de la demande: 28.04.1993
(73) Titulaire: ASULAB S.A., CH-2501 Bienne (CH)
(72) Inventeur: Christen, Michel, CH-2036 Cormondrèche (CH); Froidevaux, Raymond, CH-2017 Boudry (CH)
(74) Mandataire: de Montmollin, Henri

(56) Documents cités:
- GB-A- 2 234 817
- GB-A- 2 242 525
- US-A- 3 035 450
- US-A- 3 897 690
- US-A- 4 221 131
- US-A- 4 515 016

## Description

L'invention concerne les capteurs de mesure de grandeurs physiques qui comportent un support élastiquement déformable muni de moyens de détection sensibles à une sollicitation, par exemple à une accélération.

Sous leur forme la plus simple ces capteurs comprennent un support déformable ayant la forme générale d'une poutre de section rectangulaire, fixée en porte-à-faux sur un bâti. Ce support déformable qui est prévu pour fléchir selon un axe dit sensible comporte, d'une part, un résonateur à quartz qui forme les moyens de détection et qui est directement fixé sur celui-ci dans une zone médiane. D'autre part, le support comporte une masse sismique fixée à l'extrémité opposée à celle par lequel il est fixé au bâti. Ainsi, sous l'action d'une sollicitation telle qu'une accélération, la masse se déplace et déforme le support et le résonateur qui lui est lié. Cette déformation entraîne une variation de la vibration du résonateur qui constitue un signal représentatif de la grandeur de la sollicitation subie. Ce signal est ensuite traité par un circuit électronique approprié.

Plus particulièrement, cette invention concerne de tels capteurs comprenant en outre des moyens de protection destinés à protéger lesdits moyens de détection contre des chocs accidentels susceptibles de produire des sollicitations qui présentent une composante perpendiculaire à l'axe sensible.

On sait en effet que les capteurs de ce type sont des instruments de mesure de précision délicats dont les moyens de détection peuvent être facilement détériorés en raison de leur extrême fragilité. Cette détérioration intervient le plus fréquemment lors de la manipulation du capteur au moment de son montage, par exemple sur un véhicule, ou lors de son remplacement, voire encore lors des examens de contrôle de fonctionnement de celui-ci. Cette détérioration se produit notamment lorsque les moyens de détection subissent des sollicitations non parallèles à leur axe sensible. Ceci est le cas lorsque par exemple la masse subit une accélération selon l'axe longitudinal du support et que les moyens de détection sont formés par un résonateur à quartz apte à se déformer en flexion. En effet une telle accélération provoque une traction sur les moyens de détection pour laquelle il ne sont pas prévus de sorte qu'ils atteignent rapidement leur limite de rupture et se brisent.

Une telle détérioration de ces moyens de détection est indésirable et peut avoir des conséquences graves car elle est invisible depuis l'extérieur et ces capteurs sont généralement destinés à équiper des véhicules automobiles ou tout autre engin de transport de passagers dans lesquels ils sont censés délivrer des informations ayant une incidence directe sur le comportement d'éléments essentiels du véhicule et par conséquent sur la sécurité des passagers.

On connait, notamment du document FR-A-2 490 828, un capteur formant accéléromètre comprenant une structure de protection contre les chocs. Selon ce document, le boîtier de l'accéléromètre est enrobé d'un caoutchouc siliconé destiné à absorber d'éventuels chocs accidentels.

Bien que cet enrobage absorbe et amortisse une partie des chocs, il n'évite pas la transmission d'une accélération au delà d'un certain seuil et ne constitue donc pas un système de protection très fiable des moyens de détection. De plus, le boîtier de cet accéléromètre ne peut être démonté sans détériorer la couche de protection si bien qu'une intervention sur cet accéléromètre est longue et coûteuse.

Des moyens de protection d'un capteur contre une sollicitation perpendiculaire à l'axe sensible sont aussi connus du document GB-A-2 242 525.

Aussi, la présente invention a-t-elle pour but de remédier aux inconvénients de l'art antérieur susmentionné en fournissant un capteur de mesure équipé de moyens de protection de ses moyens de détection, ces moyens de protection étant de construction simple et étant efficaces quel que soit le niveau d'intensité d'un choc reçu par le capteur ou d'une accélération dont une composante se situe hors de l'axe sensible du capteur.

A cet effet l'invention a pour objet un capteur de mesure d'une grandeur physique du type comprenant :
- un bâti,
- une masse sismique susceptible de se déplacer par rapport au bâti,
- des moyens de support de la masse, ceux-ci étant solidaires du bâti et élastiquement déformables, selon un axe sensible, sous l'action de la grandeur physique,
- des moyens de détection solidaires des moyens de support, ces moyens de détection étant aptes à fournir un signal représentatif de la grandeur physique en réponse à une déformation, et
- des moyens de protection des moyens de détection contre une sollicitation ayant une composante située dans un plan sensiblement perpendiculaire à l'axe sensible.

Conformément à l'invention, ce capteur est caractérisé en ce que les moyens de protection sont susceptibles de permettre, lors de ladite sollicitation, un déplacement réversible de la masse par rapport aux moyens de support dans le plan et, en l'absence de ladite sollicitation, un positionnement de la masse par rapport aux moyens de support.

Ainsi, lorsque le capteur subit une sollicitation telle qu'une accélération dont une composante se situe hors de son axe sensible, par exemple lors d'un choc, la masse sismique se désolidarise des moyens de support de sorte que les moyens de détection ne subissent aucune sollicitation et qu'aucune énergie pouvant causer leur rupture n'est transmise à ces derniers.

Selon une caractéristique avantageuse de l'invention, les moyens de protection comprennent des moyens de rappel permettant à la masse de se translater de façon réversible dans un plan perpendiculaire à l'axe sensible.

On précisera aussi que les moyens de protection comprennent des moyens de butée limitant le déplacement de la masse dans le plan perpendiculaire à l'axe sensible.

D'autres caractéristiques et avantages de la présente invention apparaîtront à la lumière de description détaillée qui suit, d'un mode de réalisation de l'invention, donné à titre d'exemple non limitatif, en liaison avec les dessins annexés dans lesquels :
- la figure 1 est une vue en perspective éclatée d'un capteur de mesure selon l'invention montrant les éléments du dispositif de protection des moyens de détection ,
- la figure 2 est une vue de dessus du support du capteur de la figure 1, équipé d'une masse sismique associée aux moyens de protection des moyens de détection du capteur selon l'invention, la masse sismique étant représentée en traits pleins dans une première position correspondant à sa position de fonctionnement normal, et en traits mixtes interrompus dans une seconde position correspondant à une position, dite déplacée, après avoir subi et absorbé un choc, et
- la figure 3 est une vue en coupe longitudinale faite selon la ligne III-III de la figure 2 et dans laquelle on a représenté en traits mixtes interrompus une partie du bâti du capteur selon l'invention associée à des moyens de positionnement dudit support sur le bâti.

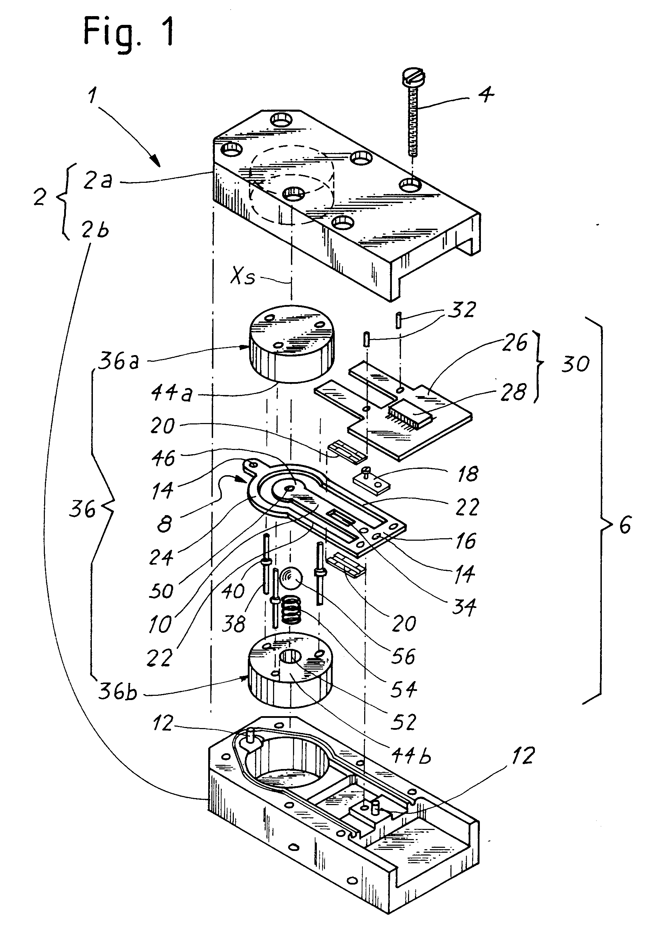

En se référant tout d'abord à la figure 1, on voit un mode de réalisation préféré du capteur de mesure selon l'invention, désigné par la référence numérique générale 1.

Ce capteur 1 comporte un bâti 2 qui est constitué de deux coques respectivement 2a et 2b de forme similaire et destinées à être assemblées par l'intermédiaire de moyens de fixation, tels que des vis, dont une seule, référencée 4, a été représentée sur la figure 1.

Le bâti 2 est conformé pour recevoir une unité fonctionnelle 6 qui comprend des moyens de support 8 dont une partie 10 au moins est élastiquement déformable sous l'action d'une grandeur physique à mesurer.

Les moyens de support 8 sont solidaires du bâti 2 et sont positionnés fixement sur celui-ci par l'intermédiaire de deux goupilles 12 engagées dans des orifices, non représentés, ménagés respectivement dans les coques 2a et 2b du bâti 2. Ces goupilles 12 coopèrent avec des orifices 14 ménagés dans les moyens de support 8.

Dans cet exemple particulier, les moyens de support 8 comportent une base 16 qui est destinée à être fixée mécaniquement sur le bâti 2 par l'intermédiaire d'une bride 18.

A partir de la base 16 s'étend, en porte-à-faux, un organe 10 de forme générale allongée qui est particulièrement apte à se déformer élastiquement par rapport à la base 16. Cet organe allongé 10 a la forme d'une poutre de section rectangulaire. Cette poutre 10 est prévue pour fléchir dans une direction perpendiculaire à ses grandes faces, sous l'action d'une sollicitation extérieure, et ce suivant un axe sensible Xₛ, pour solliciter des moyens de détection 20 qui seront décrit plus en détail ci-après.

Dans ce mode de réalisation, les moyens de support 8 comportent deux bras 22 reliés entre eux pour former un cadre fermé autour de l'organe allongé 10.

Les deux bras 22 s'étendent de façon coplanaire dans une direction sensiblement parallèle à celle de l'organe allongé 10 à partir de la base 16 sensiblement jusqu'à l'extrémité libre de ce dernier. Les deux bras 22 sont ensuite reliés entre eux par l'intermédiaire d'une partie de jonction 24 ayant la forme générale d'un fer à cheval. Un des orifices de positionnement 14 est ménagé dans la partie de jonction 24 des moyens de support 8 , tandis que l'autre est ménagé dans la base 16.

L'unité fonctionnelle 6 comporte aussi deux moyens de détection 20 constitués par deux résonateurs à quartz en forme de double diapason montés de part et d'autre de l'organe allongé 10 et dans sa zone médiane. Chaque résonateur 20 est relié électriquement à une plaque de circuit imprimé associée 26 sur laquelle sont montés des composants électroniques 28, dont un seul a été représenté à la figure. Les éléments 26 et 28 constituent un circuit électronique 30.
On notera d'une part que la plaque de circuit imprimé 26 est fixée sur les moyens de support 8 par l'intermédiaire de tenons 32 chassés dans la base 16 et d'autre part qu'à l'endroit où sont montés les résonateurs 20 l'organe allongé 10 comporte sous chacun des résonateur 20 une ouverture traversante 34 permettant au résonateur 20 de vibrer librement.

De façon connue en soi, les résonateurs 20 sont connectés à des circuits oscillants, non représentés, dont les fréquences de résonance varient en fonction de la déformation des résonateurs et par conséquent en fonction de la déformation de l'organe 10. Les circuits résonants délivrent des signaux qui sont traités et analysés dans le circuit électronique 30. Celui-ci délivre un signal variable en fonction de la déformation de l'organe 10. Dans cet exemple une masse sismique 36 est fixée à l'extrémité libre de l'organe 10 et est susceptible de se déplacer par rapport au bâti lorsque le capteur 1 subit une accélération.

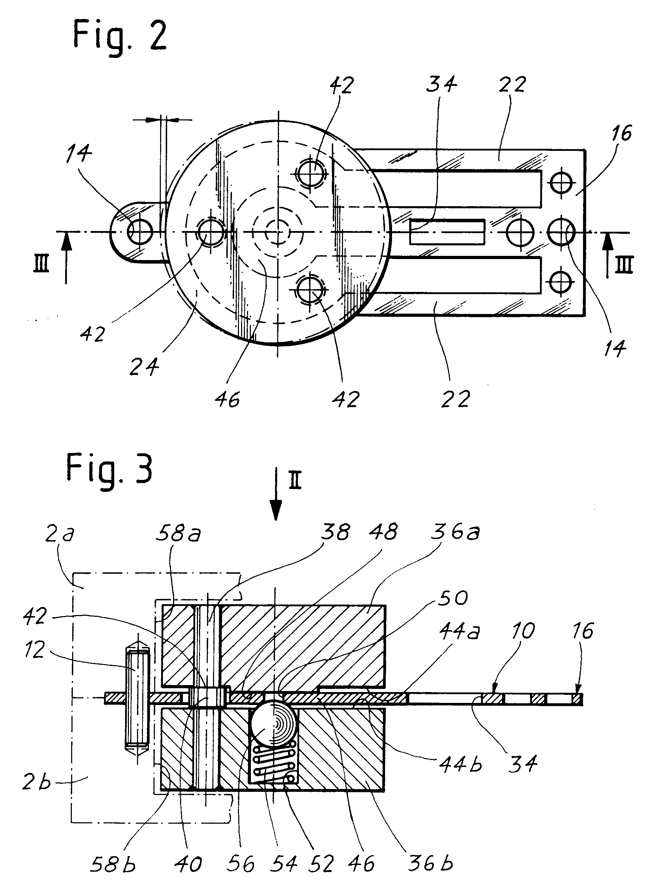

En se référant désormais également aux figures 2 et 3, on voit que la masse 36 comprend deux demi-masses 36a et 36b s'étendant chacune de part et d'autre des moyens de support 8 et qui sont reliées entre elles au moyen de trois goupilles 38. Ces goupilles 38 sont régulièrement réparties dans les masses 36a et 36b et sont décalées angulairement l'une par rapport à l'autre d'un angle d'environ 120°. Elles comportent chacune dans leur partie médiane une collerette 40 qui forme deux épaulements 42 sur lesquels viennent s'appuyer directement les surfaces 44a, 44b en regard des deux demi-masses 36a et 36b. La collerette 40 forme par sa largeur une entretoise qui définit un espace libre entre les deux demi-masses 36a et 36b. La poutre 10 ainsi que la partie en fer à cheval 24 des moyens de support 8 s'étend partiellement dans l'espace E. L'évidement laissé entre la poutre 10, le cadre constitué par les deux bras 22 et la partie en fer à cheval 24 forme un passage dans lequel s'étendent avec jeu les collerettes 40.

On remarquera par ailleurs, et notamment sur la figure 1 et 2, que l'extrémité libre de la poutre 10 comporte une partie élargie 46 sur laquelle repose directement une partie 48 de la surface 44a de la demi-masse 36a.

De plus cette partie 46 comporte en son centre un orifice 50 débouchant au moins dans une direction opposée à la partie 48 et notamment en regard de la face 44b de l'autre demi-masse 36b.

A l'intérieur de la demi-masse 36b est ménagé un logement borgne 52 qui débouche en regard de l'orifice 50 ménagé dans la partie 46 de la poutre 10.

Le logement 52 comprend un ressort hélicoïdal de compression 54 qui repose en appui sur le fond du logement borgne 52 et qui sollicite une bille 56 également logée au moins en partie dans le logement 52. La bille 56 est ainsi interposée entre l'organe 10 et plus précisément la partie 46 de ce dernier et une extrémité du ressort 54.

On remarquera aussi notamment sur la figure 3, que le ressort 54 forme des moyens de rappel qui agissent sur la bille 56 logée partiellement dans l'orifice 50.

En outre, la pénétration de la bille 56 dans l'orifice 50 sous l'effet de la poussée du ressort 54 forme des moyens de positionnement de la masse sismique 36 par rapport aux moyens de support 8 et sur ceux-ci, et plus particulièrement sur la poutre 10.

Le fonctionnement du capteur de mesure selon l'invention est le suivant.

En fonctionnement normal, tel que représenté en traits pleins aux figures 2 et 3, la masse sismique 36 est maintenue solidaire de la poutre 10, et donc des moyens de support 8, par l'intermédiaire des moyens de positionnement formés par la bille 56, le ressort 54 et l'orifice 50. Dans cette configuration, lorsque le capteur de mesure selon l'invention subit une sollicitation selon son axe sensible Xₛ la masse 36 se déplace toujours selon cet axe sensible Xₛ par rapport au bâti 2 ce qui déforme de façon subséquente la poutre 10 et à leur tour les résonateurs 20, ce qui engendrent un signal représentatif de la sollicitation reçue.

On précisera que le déplacement susmentionné de la masse 36 est amorti grâce à la disposition de deux cavités 58a et 58b respectivement ménagées dans les deux coques 2a, 2b du bâti 2.

Lorsque la masse sismique 36 subit une sollicitation comprenant une composante se trouvant en dehors de l'axe sensible Xₛ, et notamment une accélération résultant de chocs dont la composante essentielle s'étend dans un plan sensiblement perpendiculaire à l'axe sensible Xₛ, la masse sismique 36 subit une force F tendant à la déplacer dans le sens de cette force dans un plan perpendiculaire à l'axe sensible Xₛ selon un mouvement de translation le long de la poutre 10.

Le déplacement en translation de la masse sismique tend alors à comprimer le ressort 54 par l'intermédiaire de la liaison entre la bille 56 et l'orifice 50. Cette compression du ressort 54 déplace la bille 56 dans une direction parallèle à l'axe sensible Xₛ et escamote au moins partiellemnet celle-ci dans le logement borgne 52 de sorte que la masse sismique 36 se désolidarise de la poutre 10 et vient s'appuyer contre la paroi cylindrique des cavités d'amortissement 58a et 58 qui forme des moyens de butée. Ainsi, l'énergie reçue par la masse sismique 36 à cause de la sollicitation extérieure lors du choc est transformée en énergie cinétique qui est à son tour transmise au bâti 2 qui l'absorbe sans conséquence dommageable pour la poutre 10 et les éléments sensibles qu'elle comporte.

Lorsque le choc a cessé, le jeu prévu entre le pourtour extérieur de la masse sismique 36 et la paroi cylindrique des cavités d'amortissement 58a et 58b permet au sommet de la bille 56 situé dans l'orifice 50 de ne pas dépasser le bord périphérique de cette cavité de sorte que elle est rappelée sous l'action du ressort de compression 54 vers et à l'intérieur de l'orifice 50.

Cet agencement forme des moyens de rappel permettant à la masse 36 de se translater de façon réversible, et notamment de revenir en position fonctionnelle après avoir subit un choc.

On comprendra donc que le capteur de mesure selon l'invention comporte des moyens de protection susceptibles de permettre, lors d'un choc, un déplacement réversible de la masse sismique 36 par rapport aux moyens de support 8 et en particulier par rapport à la poutre 10, dans le plan normal à l'axe sensible Xₛ, ainsi qu'un positionnement de la masse en l'absence de choc.

## Revendications

1. Capteur de mesure (1) d'une grandeur physique du type comprenant :
- un bâti (2),
- une masse sismique (36) susceptible de se déplacer par rapport au bâti,
- des moyens de support (8) de la masse (36), ceux-ci étant solidaires du bâti et élastiquement déformables, selon un axe sensible (Xₛ), sous l'action de la grandeur physique,
- des moyens de détection (20) solidaires des moyens de support (8), ces moyens de détection étant aptes à fournir un signal représentatif de la grandeur physique en réponse à une déformation des moyens de support (8), et
- des moyens de protection (50, 52, 54, 56) des moyens de détection (20) contre une sollicitation présentant au moins une composante située dans un plan sensiblement perpendiculaire à l'axe sensible (Xₛ), caractérisé en ce que les moyens de protection sont susceptibles de permettre, lors du choc, un déplacement réversible de la masse (36) par rapport au support (8) dans le plan et en l'absence de choc un positionnement de la masse (36).

2. Capteur de mesure selon la revendication 1, caractérisé en ce que les moyens de protection comprennent des moyens de rappel (54) permettant à la masse (36) de se translater de façon réversible dans le plan perpendiculaire à l'axe sensible.

3. Capteur de mesure selon la revendication 1 ou 2, caractérisé en ce que les moyens de protection comprennent des moyens de butée (58a, 58b) limitant le déplacement de la masse (36) dans le plan perpendiculaire à l'axe sensible.

4. Capteur de mesure selon la revendication 3 dans lequel le bâti (2) comprend des cavités d'amortissement dans lesquelles est suspendue la masse (36), caractérisé en ce que les moyens de butée sont formés par les parois intérieures (58a, 58b) desdites cavités.

5. Capteur de mesure selon la revendication 2, caractérisé en ce que les moyens de protection comprennent en outre des moyens de positionnement (50, 56) coopérant avec les moyens de rappel (54).

6. Capteur de mesure selon la revendication 5, caractérisé en ce que les moyens de protection comprennent un ressort (54) formant les moyens de rappel agissant sur bille (56) logée partiellement dans un orifice (50).

7. Capteur de mesure selon la revendication 6, caractérisé en ce que l'orifice (50) est ménagé dans les moyens de support (8) et en ce que le ressort (54) ainsi que la bille (56) sont logés dans la masse (36).

8. Capteur de mesure selon la revendication 7, caractérisé en ce que la bille (56) est interposée entre les moyens de support (8) et le ressort (54).

9. Capteur de mesure selon l'une des revendications précédentes, caractérisé en ce que les moyens de support comprennent une base (16) à partir de laquelle s'étendent,d'une part, un organe allongé (10) en porte-à-faux et, d'autre part, deux bras (22) reliés entre eux formant un cadre fermé autour dudit organe allongé (10), lesdits moyens de détection étant portés par ledit organe allongé.

10. Capteur de mesure selon la revendication 9, caractérisé en ce que l'organe allongé (10) comporte une extrémité libre élargie (46) dans laquelle est ménagée ledit orifice (50).

11. Capteur de mesure selon l'une quelconque des revendications précédentes, caractérisé en ce que la masse sismique (36) comprend deux demi-masses (36a, 36b) reliées entre elles et s'étendant chacune de part et d'autre des moyens de support (8).

## Patentansprüche

1. Meßfühler (1) einer physikalischen Größe mit der Bauart, die umfaßt:
- ein Gestell (2),
- eine seismische Masse (36), die relativ zum Gestell verlagerbar ist,
- Supportmittel (8) für die Masse (36), welche mit dem Gestell verbunden und elastisch deformierbar sind in Richtung einer empfindlichen Achse (Xₛ) unter der Wirkung der physikalischen Größe,
- Erfassungsmittel (20), die mit den Supportmitteln (8) verbunden sind, welche Erfassungsmittel ausgebildet sind zum Liefern eines Signals, das für die physikalische Größe repräsentativ ist in Reaktion auf eine Deformation der Supportmittel (8), und
- Mittel (50, 52, 54, 56) zum Schützen der Erfassungsmittel (20) gegen eine Auslenkung, die mindestens eine Komponente umfaßt, die sich in einer Ebene im wesentlichen senkrecht zur empfindlichen Achse (Xₛ) befindet, dadurch gekennzeichnet, daß die Mittel zum Schützen ausgebildet sind, um während des Stoßes eine reversible Verlagerung der Masse (36) relativ zum Support (8) in der Ebene zu ermöglichen und bei Fehlen des Stoßes eine Positionierung der Masse (36).

2. Meßfühler nach Anspruch 1, dadurch gekennzeichnet, daß die Mittel zum Schützen Rückstellmittel (54) umfassen, die es der Masse (36) ermöglichen, in reversibler Weise in der Ebene senkrecht zur empfindlichen Achse auszuweichen.

3. Meßfühler nach Anspruch 1 oder 2, dadurch gekennzeichnet, daß die Mittel zum Schützen Anschlagmittel (58a, 58b) umfassen, die die Verlagerung der Masse (36) in der Ebene senkrecht zur empfindlichen Achse begrenzen.

4. Meßfühler nach Anspruch 3, bei dem das Gestell (2) Dämpfungsausnehmungen umfaßt, in denen die Masse (36) aufgehangen ist, dadurch gekennzeichnet, daß die Anschlagmittel von Innenwandungen (58a, 58b) der Hohlräume gebildet sind.

5. Meßfühler nach Anspruch 2, dadurch gekennzeichnet, daß die Mittel zum Schützen ferner Positioniermittel (50, 56) umfassen, die mit den Rückstellmitteln (54) zusammenwirken.

6. Meßfühler nach Anspruch 5, dadurch gekennzeichnet, daß die Mittel zum Schützen eine Feder (54) umfassen, die die Rückstellmittel bildet und auf eine teilweise in eine Öffnung (50) greifende Kugel (56) einwirkt.

7. Meßfühler nach Anspruch 6, dadurch gekennzeichnet, daß die öffnung (50) in die Supportmittel (8) eingearbeitet ist, und daß die Feder (54) wie auch die Kugel (56) in der Masse (36) untergebracht sind.

8. Meßfühler nach Anspruch 7, dadurch gekennzeichnet, daß die Kugel (56) zwischen dem Supportmittel (8) und der Feder (54) eingefügt ist.

9. Meßfühler nach einem der vorangehenden Ansprüche, dadurch gekennzeichnet, daß die Supportmittel eine Basis (16) umfassen, von der ausgehend sich einerseits ein langgestrecktes Organ (10) als Kragträger erstreckt und andererseits zwei Arme (22), die miteinander verbunden sind unter Bildung eines geschlossenen Rahmens um das langgestreckte Organ (10), wobei die Erfassungsmittel von dem langgestreckten Organ getragen sind.

10. Meßfühler nach Anspruch 9, dadurch gekennzeichnet, daß das langgestreckte Organ (10) ein verbreitertes freies Ende (46) umfaßt, in welches die Öffnung (50) eingearbeitet ist.

11. Meßfühler nach einem der vorangehenden Ansprüche, dadurch gekennzeichnet, daß die seismische Masse (36) zwei Halbmassen (36a, 36b) umfaßt, die miteinander verbunden sind und sich jeweils auf einer Seite der Supportmittel (8) befinden.

## Claims

1. Measurement sensor (1) for a physical magnitude of the type which comprises :
- a framework (2),
- a seismic mass (36) capable of being displaced relative to the framework,
- support means (8) for the mass (36), such being fixed to the framework and elastically deformable along a sensing axis (Xₛ) under the action of the physical magnitude,
- detecting means (20) fixed to the support means (8), such detecting means being adapted to supply a signal representative of the physical magnitude in response to a deformation of the support means (8), and
- means for protecting (50, 52, 54, 56) the detecting means (20) against a force exhibiting at least one component located in a plane substantially perpendicular to the sensing axis (Xₛ), characterized in that the protecting means are adapted to permit a reversible displacement of the mass (36) relative to the support (8) in said plane during a shock and a positioning of the mass (36) in the absence of shock.

2. Measurement sensor according to claim 1, characterized in that the protecting means comprise return means (54) enabling reversible translation of the mass (36) in the plane perpendicular to the sensing axis.

3. Measurement sensor according to claim 1 or 2, characterized in that the protecting means comprise abutment means (58a, 58b) enabling the displacement of the mass (36) in the plane perpendicular to the sensing axis.

4. Measurement sensor according to claim 3 wherein the framework (2) comprises damping cavities in which the mass (36) is suspended, characterized in that the abutment means are formed by the interior walls (58a, 58b) of said cavities.

5. Measurement sensor according to claim 2, characterized in that the protecting means further comprise positioning means (50, 56) cooperating with said return means (54).

6. Measurement sensor according to claim 5, characterized in that the protecting means comprise a spring (54) forming the return means acting on a ball (56) partially housed in an orifice (50).

7. Measurement sensor according to claim 6, characterized in that the orifice (56) is formed in the support means (8) and in that the spring (54) as well as the ball (56) are housed in the mass (36).

8. Measurement sensor according to claim 7, characterized in that the ball (56) is interposed between the support means (8) and the spring (54).

9. Measurement sensor according to one of the preceding claims, characterized in that the support means comprises a base (16) from which extends, on the one hand, a cantilevered elongated element (10) and, on the other hand, two arms (22) coupled together to form a closed framwork around said elongated element (10), said detecting means being borne by said elongated element.

10. Measurement sensor according to claim 9, characterized in that the elongated element (10) includes an enlarged free end (46) in which said orifice (50) is formed.

11. Measurement sensor according to any one of the preceding claims, characterized in that the seismic mass (36) comprises two half masses (36a, 36b) connected together, each extending respectively on one and the other side of the support means (8).
